# EUROPÄISCHE PATENTSCHRIFT

(11) **EP 2 565 595 B1**
(45) Veröffentlichungstag und Bekanntmachung des Hinweises auf die Patenterteilung: **17.05.2017**
(21) Anmeldenummer: 12001961.7
(22) Anmeldetag: 20.03.2012
(51) Int. Cl.: G01F 23/284, G01F 23/64, G01F 23/76

(54) **Schwimmkörper zur Anzeige eines Füllstandes**
Buoyant body for displaying a fill level
Corps flottant pour l'affichage d'un niveau de remplissage

(30) Priorität: 28.06.2011 DE 102011106568
(43) Veröffentlichungstag der Anmeldung: 06.03.2013
(73) Patentinhaber: KROHNE Messtechnik GmbH, 47058 Duisburg (DE)
(72) Erfinder: Vogt, Michael, 44797 Bochum (DE); Wegemann, Uwe, 45549 Sprockhövel (DE)
(74) Vertreter: Gesthuysen, Michael

(56) Entgegenhaltungen:
- WO-A2-2008/086543
- JP-A- 62 039 801
- JP-A- 63 204 222
- US-A1- 2005 241 391

## Beschreibung

Die Erfindung betrifft einen Schwimmkörper zur Anzeige des Füllstandes eines Mediums in einem Behälter, wobei der Schwimmkörper bei bestimmungsgemäßem Einsatz von der Wandung des Behälters geführt wird und dazu geeignet ist, von einem Sender emittierte elektromagnetische Wellen in Richtung auf einen Empfänger zu reflektieren. Dabei ist bei bestimmungsgemäßem Einsatz zumindest die dem Sender zugewandte Seite des Schwimmkörpers als Reflektor zur Reflexion der elektromagnetischen Wellen auf den Empfänger ausgebildet.

Derartige Schwimmkörper werden in der Praxis eingesetzt, um bei auf dem Radarprinzip beruhenden Füllstandsmessungen ein definiertes Reflexionsverhalten im Bereich der Oberfläche des Mediums herbeizuführen, dessen Füllstand messtechnisch erfasst werden soll. Bekanntlich hängt der Reflexionsgrad elektromagnetischer Wellen an Grenzflächen - jedenfalls auch - ab von den Brechungsindizes der die Grenzfläche bildenden Medien und damit von deren Permeabilitäts- und Permittivitätszahlen. Die Amplitude der ohne Schwimmkörper reflektierten elektromagnetischen Wellen ist daher abhängig von den Materialeigenschaften der beteiligten Medien und damit abhängig von der jeweiligen konkreten Verwendung einer Füllstandsmessvorrichtung. Insbesondere ist bei ausschließlicher Nutzung der Mediumsgrenze als Reflexionsfläche praktisch nicht vorhersehbar das Verhältnis von Nutz- zu Störsignalstärke, entsprechend problematisch ist dann die Auslegung einer Füllstandmessvorrichtung. Diese Problematik wird durch den Einsatz der zuvor genannten Schwimmkörper gemildert, da die Reflexion von elektromagnetischen Wellen an gattungsgemäßen Schwimmkörpern definiert und insbesondere besser ist als die Reflexion an Medien geringer Permittivität.

Die von dem Sender, der sich üblicherweise oberhalb des Mediums befindet, in Richtung auf das Medium ausgesandten elektromagnetischen Wellen werden von dem Schwimmkörper, der teilweise aus dem Medium ragt, reflektiert, und die reflektierten Wellen werden von dem Empfänger, der sich ebenfalls üblicherweise oberhalb des Mediums befindet, empfangen. Letztlich wird der Füllstand nach einem der bekannten Radarverfahren berechnet. Bei einem dieser Verfahren wird der Füllstand aus der Laufzeit eines elektromagnetischen Pulses bestimmt. Bei einem anderen Verfahren wird die Frequenz eines kontinuierlichen elektromagnetischen Signals so moduliert, dass der Füllstand aus dem Frequenzunterschied zwischen gesendeter und empfangener Frequenz bestimmt werden kann (moduliertes Dauerstrichverfahren).

Oftmals befindet sich der Schwimmkörper in einem Referenzbehälter, der für gewöhnlich ein länglicher Hohlkörper mit verhältnismäßig geringer Querschnittsfläche ist, wobei die Wandung des Referenzbehälters den Schwimmkörper führt. Der Referenzbehälter befindet sich üblicherweise im Behälter oder seitlich neben dem Behälter, in dem sich das Medium befindet, dessen Füllstand zu bestimmen ist, und die Längsachse des Referenzbehälters ist im Wesentlichen in Richtung der Erdschwerebeschleunigung ausgerichtet. Der Referenzbehälter ist derart mit dem Behälter verbunden, dass der Füllstand des Mediums im Referenzbehälter mit dem Füllstand des Mediums im Behälter übereinstimmt. Durch die geringe Querschnittsfläche des Hohlkörpers und durch die Masse des Schwimmkörpers werden Störungen der Ruhe des Mediums, wie sie beim Zu- und Abführen des Mediums auftreten, verringert und wird auf diese Weise die Messgenauigkeit erhöht. Am oberen Ende des Referenzbehälters befinden sich üblicherweise sowohl der Sender als auch der Empfänger für die elektromagnetischen Wellen und der Referenzbehälter wird häufig als Hohleiter für die elektromagnetischen Wellen eingesetzt. Oftmals sind die Schwimmkörper mit einem Magnetsystem ausgestattet, und seitlich neben dem Referenzbehälter befindet sich zusätzlich eine Anzeigevorrichtung für den Füllstand mittels Magnetklappen oder mittels eines Folgemagneten. Die Anzeige des Füllstandes erfolgt dann durch zwei unabhängige Systeme und erhöht durch Redundanz die Ausfallsicherheit, darauf kommt es vorliegend jedoch nicht an.

Aus dem Stand der Technik bekannte Schwimmkörper besitzen eine Oberfläche, an der die elektromagnetische Welle reflektiert wird. Das grundsätzlich erforderliche Spiel des Schwimmkörpers in der Führung durch die Wandung des Behälters bedingt eine unvorhersehbare Verkippung des Schwimmkörpers, wodurch die Reflexionseigenschaften verändert werden. So kann es zu unvorhersehbaren Reflexionen der elektromagnetischen Wellen in dem sich durch die Verkippung ergebenden Spalt zwischen der Wandung des Behälters und dem Schwimmkörper kommen, welche die Messung abträglich beeinflussen.

Einen gattungsgemäßen Schwimmkörper zeigt die Offenlegungsschrift WO 2008/086543 A2. Der Schwimmkörper besteht aus drei miteinander verbundenen Kugeln und zwei flachen Scheiben an den äußeren Enden. Eine Scheibe verfügt über eine reflektierende Oberfläche und die andere Scheibe dient der Stabilisierung des Schwimmkörpers.

Einen Schwimmkörper eines Füllstandmessgeräts, bei dem die elektromagnetischen Signale an einem Seil oder Kabel entlang geführt werden, beschreibt die Offenlegungsschrift US 2005/0241391 A1. Der Schwimmkörper ist längs des Seils beweglich ausgestaltet und verfügt an einem Ende über eine die Mikrowellensignale reflektierende Scheibe.

Um das Reflexionsverhalten von Spiegeln zu beeinflussen, lässt sich beispielsweise den Druckschriften JP 62 039801 A und JP 63 204222 A die Verwendung von Schichten entnehmen, deren Dicke λ/4 bzw. λ/2 beträgt. Dabei ist λ die Wellenlänge des Lichts, für das die Spiegel Anwendung finden.

Aufgabe der vorliegenden Erfindung ist es, einen Schwimmkörper anzugeben, der verbesserte Reflexionseigenschaften für die elektromagnetischen Wellen aufweist, insbesondere unabhängig davon, ob der Schwimmkörper verkippt ist oder nicht, und der vorzugsweise kompatibel mit bestehenden mit Magnetsystemen ausgerüsteten Schwimmkörpern ist.

Der erfindungsgemäße Schwimmkörper, bei dem die zuvor hergeleitete und aufgezeigte Aufgabe gelöst ist, ist zunächst und im Wesentlichen dadurch gekennzeichnet, dass bei bestimmungsgemäßem Einsatz aus Sicht des Senders hinter dem Reflektor eine Feldschwächungsstruktur so ausgebildet ist, dass die Feldstärke im Bereich der Feldschwächungsstruktur gegenüber der Situation geschwächt ist, in der die Feldschwächungsstruktur nicht vorgesehen ist. Dabei ist die Feldschwächungsstruktur als λ/4-Filter realisiert und besteht aus abwechselnd hintereinander angeordneten großen Scheiben und kleinen Scheiben. Dabei ist es zunächst unerheblich, durch welchen physikalischen Effekt eine solche Feldschwächung bewirkt wird, ob dies beispielsweise durch eine Transformation des Feldzustandes erreicht wird und/oder ob dies durch eine Dämpfung von in den Bereich der Feldschwächungsstruktur gelangter elektromagnetischer Wellen geschieht. Im Falle der Transformation des Feldzustandes kann der Anteil der Energie zu Gunsten der reflektierten elektromagnetischen Welle verschoben werden, während im Falle der Dämpfung der elektromagnetischen Welle im Bereich der Feldschwächungsstruktur der Anteil der Energie der reflektierten Welle praktisch unverändert bleibt, aber die Energie von Störreflexionen reduziert wird. Beide beispielhaft angeführten Varianten lassen sich selbstverständlich kombinieren.

Die Verwendung des erfindungsgemäßen Schwimmkörpers mit ausgebildeten Reflexions- und Feldschwächungsstrukturen anstelle der aus dem Stand der Technik bekannten Schwimmkörper hat den Vorteil verbesserter und im Wesentlichen von der Verkippung des Schwimmkörpers unabhängiger Reflexionseigenschaften. Die dem Sender zugewandte und als Reflektor zur Reflexion der elektromagnetischen Wellen auf den Empfänger ausgebildete Seite des Schwimmkörpers erzeugt das eigentliche Nutzsignal, das zur Abstands- und damit Füllstandsbestimmung herangezogen werden soll.

Sämtliche Bestandteile des Schwimmkörpers sollten vorzugsweise aus solchen Materialien gefertigt sein, die unter anderem beständig gegen die Medien sind, deren Füllstand im Behälter gemessen wird, und gute Reflexionseigenschaften für elektromagnetische Wellen besitzen. Insbesondere muss die Dichte des Schwimmköpers in seiner Gesamtheit geringer sein als die der Medien, deren Füllstand im Behälter gemessen werden soll.

Bei einer bevorzugten Ausgestaltung der Erfindung ist vorgesehen, dass die Reflexionseigenschaften durch eine aus Sicht des Senders der elektromagnetischen Wellen ebene oder gewölbte Ausgestaltung der Fläche des Reflektors optimiert sind.

Bei einer ganz besonders bevorzugten Ausgestaltung ist vorgesehen, dass der Schwimmkörper aus einem Auftriebskörper und einer daran anschließenden Feldschwächungsstruktur besteht. Die Abmessungen von Auftriebskörper und Feldschwächungsstruktur sind so gewählt, dass bei einem Verkippen des Schwimmkörpers im Behälter nur der Auftriebskörper die Wandung des Behälters berührt, die Feldschwächungsstruktur hingegen die Wandung des Behälters aber nicht berührt. Auf diese Weise werden elektrische Ladungen abgeführt, wodurch eine Explosionsgefahr bei entzündlichen Medien vermieden wird.

Erfingdungsgemäß ist die Feldschwächungsstruktur als λ/4-Filter realisiert (λ ist die Wellenlänge der verwendeten elektromagnetischen Wellen), bei dem eine Feldschwächung durch destruktive Überlagerung der in den Bereich der Feldschwächungsstruktur gelangten elektromagnetischen Wellen bewirkt wird. Ein solcher λ/4-Filter transformiert den Feldzustand in dem Spalt zwischen dem Reflektor und der Feldschwächungsstruktur einerseits und der Wandung des Behälters andererseits derart, dass ein Großteil der elektromagnetischen Welle reflektiert wird; wie bei anderen auf Interferenz beruhenden Filtern auch, geht keine Energie "verloren", wird auch kein elektromagnetisches Feld im klassischen Sinn gedämpft. Die als λ/4-Filter ausgestaltete Feldschwächungsstruktur wirkt damit praktisch auch als Reflektor, es ergibt sich an der Oberseite des Reflektors eine fast vollständige Reflexion, wie sie sich bei einem "Kurzschluss" mit einer vollständig geschlossenen metallischen Wand ergeben würde.

Die Scheiben haben - in Wellenausbreitungsrichtung gesehen - in einer Ausgestaltung eine Stärke von etwa einem ungeradzahligen Vielfachen eines Viertels der Wellenlänge der verwendeten elektromagnetischen Wellen.

In einem alternativen Ausführungsbeispiel besteht der Schwimmkörper aus einer Feldschwächungsstruktur und einem Reflektor, wobei die Feldschwächungsstruktur auch die Aufgabe des Auftriebskörpers übernimmt. Ein separater Auftriebskörper entfällt. Ein solcher Schwimmkörper ist sehr kompakt und neigt insgesamt weniger zum Verkippen als ein Schwimmkörper mit "aufgesetzter" Feldschwächungsstruktur.

Bei einem weiteren vorteilhaften Ausführungsbeispiel ist mindestens eine der kleinen Scheiben von mindestens einem Ring aus mindestens einem dielektrischen Material umgeben. Ein solcher Ring beeinflusst die Wechselwirkung der elektromagnetischen Welle mit der Feldschwächungsstruktur in vorteilhafter Weise, denn durch die weitere Grenzfläche kann die Wellenführung in die und in der Feldschwächungsstruktur gezielt beeinflusst werden. Bei einer Weiterbildung der Erfindung ist vorgesehen, dass insbesondere der Reflektor und die Feldschwächungsstruktur mit einem dielektrischen Material umhüllt sind. Diese Umhüllung beeinflusst die Reflexion und die Dämpfung der elektromagnetischen Welle in vorteilhafter Weise, ferner kann eine solche Umhüllung auch als Korrosionsschutz ausgelegt sein.

Ein weiterer Vorteil besteht darin, dass eine eine zerklüftete Geometrie aufweisende Feldschwächungsstruktur mit einer glatteren Kontur ausgestattet werden kann, was u. a. das unerwünschte Anhaften des Mediums an dem Schwimmkörper effektiv zu vermeiden hilft.

In einer alternativen Ausgestaltung ist die Ausdehnung der Scheiben nicht kreisförmig, wodurch die Reflexions- und Dämpfungseigenschaften des Schwimmkörpers für die elektromagnetischen Wellen beispielsweise an die Geometrie des Behälters angepasst werden kann.

Im Einzelnen gibt es nun verschiedene Möglichkeiten, den erfindungsgemäßen Schwimmkörper auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen
- Fig. 1: ein Ausführungsbeispiel eines aus dem Stand der Technik bekannten Schwimmkörpers, der Teil einer Füllstandsmessvorrichtung ist,
- Fig. 2a: ein Ausführungsbeispiel eines erfindungsgemäßen Schwimmkörper in einem Behälter in Seitenansicht,
- Fig. 2b: den Schwimmkörper gemäß Fig. 2a in verkippter Position,
- Fig. 3a: den Schwimmkörper gemäß Fig. 2a in Aufsicht,
- Fig. 3b: ein weiteres Ausführungsbeispiel eines erfindungsgemäßen Schwimmkörpers in Aufsicht,
- Fig. 4: ein weiteres Ausführungsbeispiel eines erfindungsgemäßen Schwimmkörpers in Seitenansicht und
- Fig. 5: ein letztes Ausführungsbeispiel eines erfindungsgemäßen Schwimmkörpers in Seitenansicht.

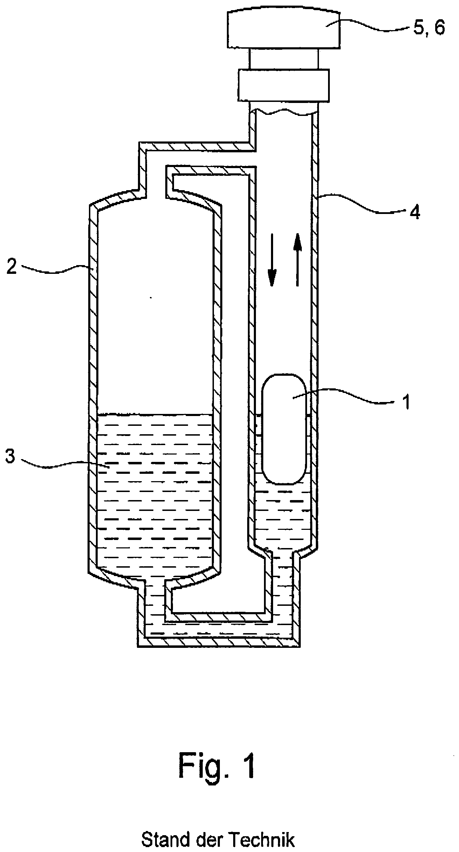

In Fig. 1 ist ein typischer Anwendungsfall für einen aus dem Stand der Technik bekannten Schwimmkörper 1 dargestellt, mit dessen Hilfe der Füllstand eines in einem Behälter 2, 4 befindlichen Mediums 3 ermittelt werden soll. Dazu ist ein Referenzbehälter 4 derart mit dem Behälter 2 verbunden, dass der Füllstand des Mediums 3 im Behälter 2 dem Füllstand des Mediums 3 im Referenzbehälter 4 entspricht. Im Medium 3 im Referenzbehälter 4 schwimmt der dem Stand der Technik entsprechender Schwimmkörper 1, der teilweise aus dem Medium 3 herausragt. Der Schwimmkörper 4 wird durch die Wandung des Referenzbehälters 4 seitlich geführt, so dass er sich nur noch in Richtung der Längsachse des Referenzbehälters 4 bewegen kann. Jedoch ist zwischen dem Schwimmkörper 1 und der Wandung des Referenzbehälters 4 ein Spiel vorhanden, welches ein unvermeidbares und unvorhersagbares Verkippen des Schwimmkörpers 1 im Referenzbehälter 4 zur Folge hat.

Ein mit elektromagnetischen Wellen nach dem Radarprinzip arbeitendes Füllstandsmessgerät 5, 6 weist einen Sender 5 und einen Empfänger 6 für elektromagnetische Wellen auf und emittiert elektromagnetische Wellen, die sich im Wesentlichen entlang der Längsachse des Referenzbehälters 4 in Richtung auf den Schwimmkörper 1 ausbreiten. Der Referenzbehälter 4 stellt für die elektromagnetischen Wellen einen Hohlleiter dar. Der Teil des Schwimmkörpers 1, der aus dem Medium 3 ragt und ohne Berücksichtigung des Verkippens weitgehend senkrecht zur Längsachse des Referenzbehälters 4 erstreckt ist, ist ein Reflektor 20 für die vom Füllstandsmessgerät 5, 6 emittierten Wellen.

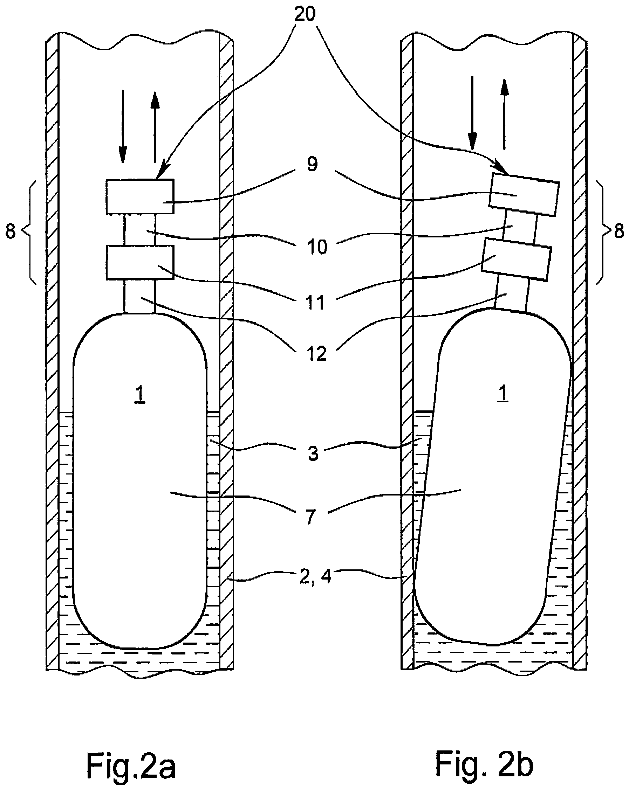

Der erforderliche umlaufende Spalt zwischen dem Schwimmkörper 1 und der Wandung des Referenzbehälters 1 besitzt unerwünschte Eigenschaften, er begünstigt die Entstehung von Störreflexionen, die einer präzise Füllstandmessung abträglich sind. Zusätzlich entstehen durch das unvermeidbare und unvorhersagbare Verkippen des Schwimmkörpers 1 im Referenzbehälter 4 Unsymmetrien im erwähnten Spalt, welche die reflektierte elektromagnetische Welle ebenfalls abträglich beeinflussen. In den in den Fig. 2 bis 5 schematisch dargestellten erfindungsgemäßen Ausführungsbeispielen des Schwimmkörpers 1 sind die Reflexionseigenschaften durch Feldtransformation gegenüber dem in Fig. 1 dargestellten Stand der Technik signifikant verbessert.

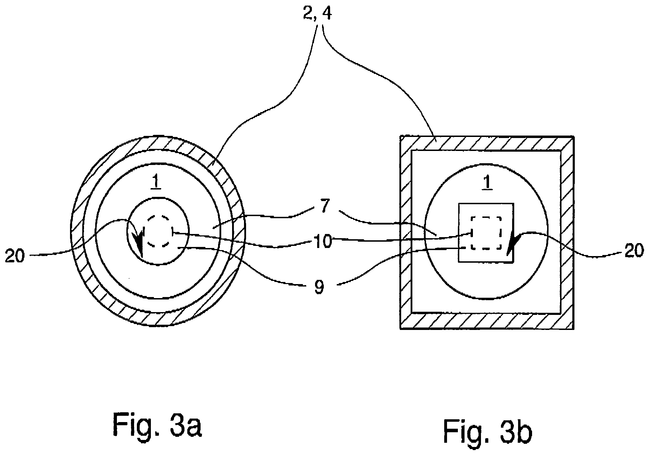

Das in Fig. 2a, 2b und 3a dargestellte Ausführungsbeispiel des erfindungsgemäßen Schwimmkörpers 1 besteht aus einem zylinderförmigen Auftriebskörper 7, bei dem die bei einem idealen Zylinder vorhandenen Kanten jedoch abgestumpft sind. Der Auftriebskörper 7 ist bis auf den erforderlichen Spalt an den Innendurchmesser des Referenzbehälters 4 angepasst. An den aus dem Medium 3 ragenden Teil des Auftriebskörpers 7 schließt sich eine Feldschwächungsstruktur 8 an. Dabei ist der Auftriebskörper 7 ausgebildet wie ein aus dem Stand der Technik bekannter Schwimmkörper, der mit einem hier nicht gezeigten Magnetsystem ausgestattet ist. Deswegen kann der erfindungsgemäße Schwimmkörper 1 mit einem bestehenden Magnetsystemen ausgestattet werden, wodurch er kompatibel mit bestehenden Füllstandsmesssystemen ist, welche den Füllstand beispielsweise durch Magnetklappen oder einen Folgemagnet anzeigen.

Die Feldschwächungsstruktur 8 besteht aus zur Längsachse des Auftriebskörpers 7 konzentrischen Scheiben 9, 10, 11, 12 mit einer Abfolge aus Sicht des Füllstandmessgeräts 5 von einer Scheibe 9 mit großem Durchmesser, einer Scheibe 10 mit kleinem Durchmesser, einer Scheibe 11 mit großem Durchmesser und einer Scheibe 12 mit kleinem Durchmesser, also aus zwei Scheiben 10, 12 mit kleinem Durchmesser und zwei Scheiben 9, 11 mit großem Durchmesser. Der Durchmesser der großen Scheiben 9, 11 ist dabei deutlich größer als der der kleinen Scheiben 10, 12. Die Dicke einer jeden der Scheiben 9 - 12 beträgt im Wesentlichen ein Viertel der Wellenlänge der eingesetzten elektromagnetischen Wellen, bei anderen hier nicht dargestellten Ausführungsbeispielen beträgt die Dicke einer jeden der Scheiben im Wesentlichen ein ungeradzahlig Vielfaches eines Viertels der Wellenlänge der eingesetzten elektromagnetischen Wellen.

Die Scheiben 9-12 bilden zusammen mit dem Teil der Oberfläche des Auftriebskörpers 7 einen λ/4-Filter, der weitgehend parallel zu den ebenen Flächen der Scheiben 9-12 ausgerichtet ist. In einer alternativen - hier jedoch nicht dargestellten - Ausführung ist die Dicke der Scheibe 12 wesentlich größer als ein Viertel der Wellenlänge, wodurch nur noch die Scheiben 9-11 einen λ/4-Filter bilden. Die ebene Fläche der großen Scheibe 9, welche dem Füllstandsmessgerät 5, 6 am nächsten liegt, bildet den Reflektor 20 für die vom Sender des Füllstandmessgeräts ausgesandten elektromagnetischen Wellen. In Fig. 2b ist der Schwimmkörper 1 im Referenzbehälter 4 verkippt. Die Durchmesser der Scheiben 9-12 sind derart gewählt, dass keine der Scheiben 9-12 mit dem Referenzbehälter in Berührung kommen kann. Durch die Feldschwächungsstruktur 8 sind die Reflexionseigenschaften des erfindungsgemäßen Schwimmkörpers 1 sowohl im verkippten als auch nicht-verkippten Zustand besser als bei Schwimmkörpern nach dem Stand der Technik, vor allem aber sind die Reflexionseigenschaften des erfindungsgemäßen Schwimmkörpers 1 sowohl im verkippten als auch im nicht-verkippten Zustand praktisch gleichbleibend gut. Durch Auslegung der Feldschwächungsstruktur 8 als λ/4-Filter wird ein größerer Anteil der eingestrahlten Leistung wieder reflektiert, der Anteil der reflektierten elektromagnetischen Strahlung ist im Verhältnis zur insgesamt eingestrahlten Energie deutlich größer als im Fall der Auslegung der Feldschwächungsstruktur als reine Dämpfungsstruktur. Zwar wird auch im letzteren Fall das Signal/Rausch-Verhältnis verbessert, jedoch wird das eigentliche Nutzsignal nicht vergrößert.

In dem in Fig. 3b dargestellten Ausführungsbeispiel wird ein Auftriebskörper 7 mit rundem Querschnitt durch die Wandung eines Referenzbehälters 1 mit recheckigem Querschnitt geführt, die Geometrien der Scheiben 9, 10 der Feldschwächungsstruktur 8 senkrecht zur Längsachse des Referenzbehälters 4 sind ebenfalls rechteckig.

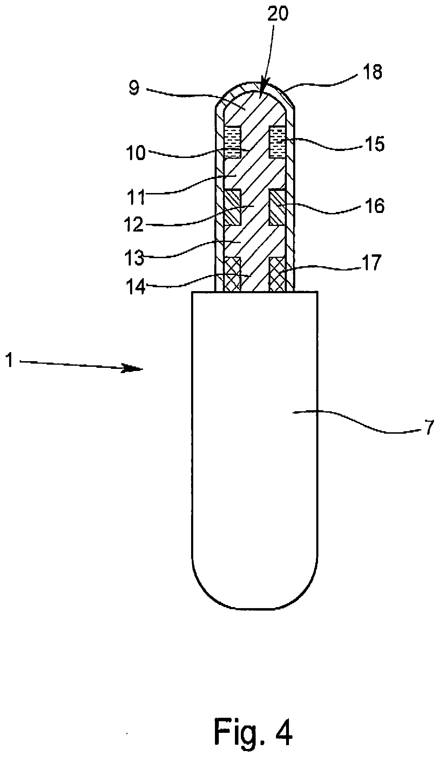

In dem in Fig. 4 dargestellten Ausführungsbeispiel ist die dem Füllstandsmessgerät 5, 6 näher liegende ebene Fläche des Auftriebskörpers 7 Teil der Feldschwächungsstruktur 8 und die Kante der Fläche nicht abgestumpft, wodurch die Dämpfungseigenschaften verändert werden. Die an dem Auftriebskörper 7 angefügte Feldschwächungsstruktur 8 besteht im Unterschied zu dem in den Fig. 2a, 2b und 3a gezeigten Ausführungsbeispiel aus drei Scheiben 10, 12, 14 mit kleinem Durchmesser und drei Scheiben 9, 11, 13 mit großem Durchmesser. Jede der kleinen Scheiben 10, 12, 14 ist jeweils mit einem Ring 15, 16, 17 aus einem anderen dielektrischen Material umgeben, deren Außendurchmesser im Wesentlichen dem Durchmesser der großen Scheiben 9, 11, 13 entspricht. Die Scheibe 9 mit einem großen Durchmesser, die dem Füllstandsmessgerät 5,6 am nächsten liegt, ist gewölbt und die gesamte angefügte Feldschwächungsstruktur 8 ist mit einem dielektrischen Material 18 umhüllt.

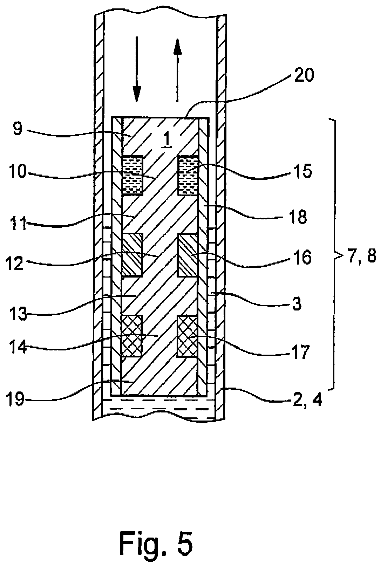

In dem in Fig. 5 dargestellten abschließenden Ausführungsbeispiel besteht der Schwimmkörper 1 aus einer Feldschwächungsstruktur 8, die gleichzeitig auch die Funktionalität der Auftriebskörpers 7 übernimmt. Die Feldschwächungsstruktur 8 ist seitlich mit einem dielektrischen Material 18 umhüllt.

## Patentansprüche

1. Schwimmkörper (1) zur Anzeige des Füllstandes eines Mediums (3) in einem Behälter (2), wobei der Schwimmkörper (1) bei bestimmungsgemäßem Einsatz von der Wandung des Behälters (2, 4) geführt wird und dazu geeignet ist, von einem Sender (5) emittierte elektromagnetische Wellen in Richtung auf einen Empfänger (6) zu reflektieren, wobei bei bestimmungsgemäßem Einsatz zumindest die dem Sender (5) zugewandte Seite des Schwimmkörpers (1) als Reflektor (20) zur Reflexion der elektromagnetischen Wellen auf den Empfänger (6) ausgebildet ist,
**dadurch gekennzeichnet,**
**dass** bei bestimmungsgemäßern Einsatz aus Sicht des Senders (5) hinter dem Reflektor (20) eine Feldschwächungsstruktur (8) so ausgebildet ist, dass die mit der Feldschwächungsstruktur (8) wechselwirkende elektromagnetische Welle geschwächt wird, dass die Feldschwächungsstruktur (8) als λ/4-Filter realisiert ist und dass die Feldschwächungsstruktur (8) aus abwechselnd hintereinander angeordneten großen Scheiben (9, 11, 13, 19) und kleinen Scheiben (10, 12, 14) besteht.

2. Schwimmkörper (1) nach Anspruch 1, **dadurch gekennzeichnet, dass** die obere Fläche des Reflektors (20) eben oder gewölbt ist.

3. Schwimmkörper (1) nach Anspruch 1 oder 2, **dadurch gekennzeichnet, dass** die Scheiben (9,10, 11, 12, 13, 14, 19) eine Dicke von im Wesentlichen einem ungeradzahligen Vielfachen eines Viertels der Wellenlänge der von dem Sender (5) emittierten elektromagnetischen Strahlung aufweisen.

4. Schwimmkörper (1) nach einem der Ansprüche 1 bis 3, **dadurch gekennzeichnet, dass** der Schwimmkörper (1) einen Auftriebskörper (7) und die daran anschließende Feldschwächungsstruktur (8) aufweist und der Auftriebskörper (7) und die Feldschwächungsstruktur (8) in ihren Abmessungen so gewählt sind, dass bei einem Verkippen des Schwimmkörpers (1) im Behälter (2, 4) der Auftriebskörper (7) die Wandung des Behälters (2, 4) kontaktiert, die Feldschwächungsstruktur (8) die Wandung des Behälters (2, 4) aber nicht kontaktiert.

5. Schwimmkörper (1) nach Anspruch 4, **dadurch gekennzeichnet, dass** der Reflektor (20) und die Feldschwächungsstruktur (8) auch die Funktionalität des Auftriebskörpers (7) übernehmen und die Feldschwächungsstruktur (8) zumindest an den Kontaktstellen mit der Wandung des Behälters (2, 4) mit einem dielektrischen Material umhüllt ist.

6. Schwimmkörper (1) nach einem der Ansprüche 1 bis 5, **dadurch gekennzeichnet, dass** mindestens eine der kleinen Scheiben (10, 12, 14) von mindestens einem Ring (15, 16, 17) aus mindestens einem dielektrischen Material umgeben ist.

7. Schwimmkörper (1) nach einem der Ansprüche 1 bis 6, **dadurch gekennzeichnet, dass** der Reflektor (20) und die Feldschwächungsstruktur (8) mit einem dielektrischen Material (18) umhüllt sind.

## Claims

1. Float (1) for displaying the fill level of a medium (3) in a container (2), wherein the float (1), in the intended use, is guided from the wall of the container (2, 4) and is suitable for reflecting electromagnetic waves emitted from a transmitter (5) toward a receiver (6), wherein, in the intended use, at least the side of the float (1) facing the transmitter (5) is designed as a reflector (20) for reflecting electromagnetic waves to the receiver (6)
**characterized in**
**that**, in the intended use, a field attenuation structure (8) is designed behind the reflector (20) from the perspective of the transmitter (5) in such a manner that the electromagnetic wave interacting with the field attenuation structure (8) is attenuated, that the field attenuation structure (8) is implemented as a λ/4 filter and that the field attenuation structure (8) consists of large discs (9), (11), (13), (19) and small discs (10), (12), (14) arranged alternately one after the other.

2. Float (1) according to claim 1, **characterized in that** the upper surface of the reflector (20) is flat or curved.

3. Float (1) according to claim 1 or 2, **characterized in that** the discs (9, 10, 11, 12, 13, 14, 19) have a thickness of essentially an uneven multiple of a quarter of the wavelength of the electromagnetic radiation emitted from the transmitter (5).

4. Float (1) according to any one of claims 1 to 3, **characterized in that** the float (1) has a lifting body (7) followed by a field attenuation structure (8) and the lifting body (7) and the field attenuation structure (8) has dimensions chosen so that when the float (1) is tilted in the container (2, 4), the lifting body (7) contacts the wall of the container (2, 4), but the field attenuation structure (8) does not contact the wall of the container (2, 4).

5. Float (1) according to claim 4, **characterized in that** the reflector (20) and the field attenuation structure (8) also take on the function of the lifting body (7) and the field attenuation structure (8) is surrounded by a dielectric material at least at the contact points with the wall of the container (2, 4).

6. Float (1) according to any one of claims 1 to 5, **characterized in that** at least one of the small discs (10, 12, 14) is surrounded by at least one ring (15, 16, 17) of at least one dielectric material.

7. Float (1) according to any one of claims 1 to 6, **characterized in that** the reflector (20) and the field attenuation structure (8) are surrounded by a dielectric material (18).

## Revendications

1. Corps flottant (1) destiné à l'indication du niveau de remplissage d'un milieu (3) dans une cuve (2), selon lequel, dans le cas d'un usage conforme, le corps flottant (1) est guidé par la paroi de la cuve (2, 4) et est capable de réfléchir des ondes électromagnétiques émises depuis un émetteur (5) en direction d'un récepteur (6), selon lequel, dans le cas d'un usage conforme, tout au moins la face du corps flottant (1) orientée vers l'émetteur (5) est conçue sous la forme d'un réflecteur (20) destiné à la réflexion des ondes électromagnétiques sur le récepteur (6),
**caractérisé en ce que**
dans le cas d'un usage conforme, une structure d'affaiblissement de champ (8) est conçue à l'arrière du réflecteur (20), du point de vue de l'émetteur (5), de telle sorte que l'onde électromagnétique interagissant avec la structure d'affaiblissement de champ (8) s'en trouve atténuée ; et
**caractérisé en ce que**
la structure d'affaiblissement de champ (8) est réalisée sous la forme d'un filtre λ/4 ; et
**caractérisé en ce que**
la structure d'affaiblissement de champ (8) est constituée de grands disques (9, 11, 13, 19) et de petits disques (10, 12, 14) qui sont disposés en alternance les uns à la suite des autres.

2. Corps flottant (1) selon la revendication 1, **caractérisé en ce que** la surface supérieure du réflecteur (20) est plane ou incurvée.

3. Corps flottant (1) selon la revendication 1 ou 2, **caractérisé en ce que** les disques (9, 10, 11, 12, 13, 14, 19) présentent une épaisseur, pour l'essentiel, d'un multiple impair d'un quart de la longueur d'onde du rayonnement électromagnétique émise par l'émetteur (5) .

4. Corps flottant (1) selon l'une des revendications 1 à 3, **caractérisé en ce que** le corps flottant (1) présente un flotteur (7) et la structure d'affaiblissement de champ (8) qui y est raccordée et **caractérisé en ce que** les dimensions du flotteur (7) et de la structure d'affaiblissement de champ (8) sont sélectionnées de telle sorte que, quand le corps flottant (1) bascule dans la cuve (2, 4), le flotteur (7) entre en contact avec la paroi de la cuve (2, 4), mais la structure d'affaiblissement de champ (8) n'entre pas en contact avec la paroi de la cuve (2, 4).

5. Corps flottant (1) selon la revendication 4, **caractérisé en ce que** le réflecteur (20) et la structure d'affaiblissement de champ (8) prennent aussi en charge la fonctionnalité du flotteur (7) et la structure d'affaiblissement de champ (8) est enveloppée par un matériau diélectrique, tout au moins au niveau des points de contact avec la paroi de la cuve (2, 4).

6. Corps flottant (1) selon l'une des revendications 1 à 5, **caractérisé en ce qu'**au moins l'un des petits disques (10, 12, 14) est entouré par au moins une bague (15, 16, 17), laquelle est constituée d'au moins un matériau diélectrique.

7. Corps flottant (1) selon l'une des revendications 1 à 6, **caractérisé en ce que** le réflecteur (20) et la structure d'affaiblissement de champ (8) sont enveloppés par un matériau diélectrique (18).
